Europäisches Patentamt

European Patent Office

Office européen des brevets

(11) Publication number: **0 206 467**
**A1**

## (12) EUROPEAN PATENT APPLICATION

(21) Application number: **86302975.7**

(22) Date of filing: **21.04.86**

(51) Int. Cl.⁴: **A 01 N 43/78**
**// (A01N43/78, 37:48)**

(30) Priority: **11.05.85 GB 8511998**

(43) Date of publication of application: **30.12.86**
**Bulletin 86/52**

(84) Designated Contracting States: **AT BE CH DE FR GB IT LI
LU NL SE**

(71) Applicant: **FBC LIMITED, Hauxton, Cambridge CB2 5HU
(GB)**

(72) Inventor: **Rea, Bryan Leslie, 61 Dovecote Lane, Beeston
Nottingham (GB)**

(74) Representative: **Wells, Norman David et al, Schering
Agrochemicals Limited Industrial Property Department
Chesterford Park Research Station, Saffron Walden
Essex CB10 1XL (GB)**

(54) **Herbicides.**

(57) Herbicidal compositions and methods using combinations of benazolin and fluoroglycofen.

EP 0 206 467 A1

Case 85/11998

Herbicides

This invention relates to a method of controlling weeds and to herbicidal compositions for use therein.

In one aspect, the invention provides a method of controlling weeds which comprises applying thereto or to a locus at which they are present an effective amount of

a)   benazolin;  and

b)   fluoroglycofen,

either together or in sequence.

In another aspect, the invention provides a herbicidal composition which comprises (a) benazolin and (b) fluoroglycofen in association with a suitable carrier and/or surface active agent.

Benazolin is the common name for the known herbicide having the chemical name 4-chloro-2-oxobenzothiazolin-3-ylacetic acid.  In this specification this name is used to include benazolin as the free acid, as a salt, e.g. the potassium salt or as an ester, e.g. the ethyl ester. Generally the benazolin is present as the ethyl ester. Whenever rates are quoted herein for the application of benazolin, these refer to the amount of acid equivalent of the compound.

Fluoroglycofen is the common name for the known herbicide 2-ethoxy-2-oxoethyl 5-(2-chloro-4-trifluoro-methylphenoxy)-2-nitrobenzoate.

It has been found that unexpected advantages are obtained by using component (a) in combination with component (b). The combination of (a) and (b) is synergistic.

The present combinations are particularly safe to a number of crop species and may therefore be of use to control weeds selectively therein. Such crops include cereals (e.g. wheat and barley), peanuts, soybeans, cotton, sunflowers and rice.

Amongst the weeds that may be controlled are mayweeds (Matricaria, Anthemis and Chamomilla spp.), red dead-nettle (Lamium purpureum), hemp nettle (Galeopsis tetrahit), chickweed (Stellaria media), fumitory (Fumaria officinalis), field pansy (Viola arvensis), knotgrass (Polygonum aviculare), speedwells (Veronica spp.), cleavers (Galium aparine), pigweeds (Amaranthus spp.), fat-hen (Chenopodium album), black nightshade (Solanum nigrum), cocklebur (Xanthium spp.), jimsonweed (Datura stramonium), morning glory (Ipomoea spp.), velvetleaf (Abutilon theophrasti), sicklepod (Cassia obtusifolia) and prickly sida (Sida spinosa).

The benazolin is usually applied at a rate of 0.01 to 1.0 kg/hectare, especially 0.05 to 0.5 kg/ha, and the fluoroglycofen is usually applied at a rate of 0.0005 to 1.0 kg/hectare, especially 0.005 to 0.1 kg/ha. The weight ratio of (a) to (b) actually applied or in a composition for dilution before use can thus vary over a wide range. However, it is suitably from 30:1 to 1:10, preferably from 15:1 to 1:1, and especially from 8:1 to 1:1.

If desired the compositions may include other suitable herbicides e.g. to broaden the spectrum. Particularly preferred further herbicides include ioxynil, bromoxynil, mecoprop, dichlorprop, MCPA, 2,4-D, 2,4-DB, MCPB, fluroxypyr, clopyralid, cyanazine, bentazone, and the salts and esters thereof.

The active herbicides may be applied in a conventional manner, for example by spraying.

For simultaneous application, the active ingredients may be tank-mixed immediately prior to use, or may be supplied in a concentrate which is usually diluted with water just before use.

The concentrate may for example be a dispersible solution which comprises the active ingredients dissolved in a water-miscible solvent with the addition of a dispersing agent. Alternatively it can comprise the ingredients in the form of a finely-ground powder in association with a dispersing agent and intimately mixed with water to give a paste or cream which can if desired be added to an emulsion of oil in water to give a dispersion of active ingredients in an aqueous oil emulsion.

The concentrate may alternatively be an emulsifiable concentrate which comprises the active ingredient dissolved in a water-immiscible solvent which is formed into an emulsion with water in the presence of an emulsifying agent.

The concentrate may also be a granular solid which comprises the active ingredients associated with powder diluents such as kaolin and granulated by known methods. Alternatively it may comprise the active ingredients adsorbed or absorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

In some circumstances it may be desirable to combine two types of formulation e.g. one of the components is present in an emulsifiable concentrate and the second component is dispersed as a powder in this concentrate.

The total concentration of the active components in a composition for direct application to the crop by conventional methods is preferably within the range of 0.02 to 1 per cent by weight. For certain methods of application, however, up to 20 per cent may be desirable.

In a concentrate composition the total amount of active compound can vary widely, for example, from 5 to 95 per cent by weight.

The invention is further described, though by way of illustration only, in the following Example.

EXAMPLE

Seeds of the plant species listed below were sown in 750 mm diameter plastic pots containing sterilised sandy loam. The pots were the watered and placed in a glasshouse until the plants had 4 or 5 true leaves. The plants then received a foliar spray of the compounds set out below, formulated as a solution in 1:1 by volume of acetone and the wetting agent polyoxyethylene (20 mols) monolaurate solution (2 g per litre).

The concentration of the test compounds and volume of application were calculated to give the desired rate of application of the compounds in 220 litres per hectare. After a further 44 days in the case of Stellaria media and 14 days in the case of Veronica persica, the plants were visually assessed for percentage herbicidal response relative to an untreated control.

In the table, the following designations are employed:

Compound A - Benazolin ethyl ester (rate calculated as acid equivalent)

Compound B - Fluoroglycofen.

Rate (g/ha)

| Species | Compound A | Compound B | % Control |
|---|---|---|---|
| Stellaria media | 75 | | 27 |
| | | 20 | 17 |
| | 75 | 20 | 57 |
| Veronica persica | 75 | | 5 |
| | | 10 | 40 |
| | 75 | 10 | 65 |
| | 37.5 | | 0 |
| | | 20 | 55 |
| | 37.5 | 20 | 70 |

CLAIMS

1. A method of controlling weeds which comprises applying thereto or to a locus at which they are present an effective amount of

    a)   benazolin;  and

    b)   fluoroglycofen,

either together or in sequence.

2. A method according to claim 1 for the selective control of weeds in cereals, peanuts, soybeans, cotton, sunflowers or rice.

3. A method according to claim 1 or claim 2 in which the benazolin is applied at a rate of 0.01 to 1.0 kg/hectare.

4. A method according to any of claims 1 to 3 in which the fluoroglycofen is applied at a rate of 0.0005 to 1.0 kg/hectare.

5. A herbicidal composition which comprises from 0.02 to 95% by weight of:

    a)   benazolin;  and

    b)   fluoroglycofen,

in association with a suitable carrier and/or surface active agent.

6. A herbicidal composition according to claim 5 in which the weight ratio of (a) to (b) is from 30:1 to 1:10.

7. A herbicidal composition according to claim 6 or claim 6 in which the weight ratio of (a) to (b) is from 15:1 to 1:1.

8. A herbicidal composition according to claim 7 in which the weight ratio of (a) to (b) is from 8:1 to 1:1.

9. A herbicidal composition according to any of claims 5 to 8 which also contains one or more of ioxynil, bromoxynil, mecoprop, fluroxypyr, clopyralid, cyanazine or bentazone, or salts or esters thereof.

10. A method according to any of claims 1 to 4 in which the components (a) and (b) are applied in the form of a composition according to any of claims 5 to 9.

ID05821

European Patent Office

**EUROPEAN SEARCH REPORT**

**0 206 467**

EP 86 30 2975

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 020 052 (ROHM & HAAS) * Page 28, example 37; page 45, lines 21-24 * | 1-10 | A 01 N 43/78 // (A 01 N 43/78 A 01 N 37:48 ) |
| | --- | | |
| A | GB-A-2 042 339 (LILLY INDUSTRIES) * Claims * | 1-10 | |
| | ----- | | |

|  | TECHNICAL FIELDS SEARCHED (Int. Cl.4) |
|---|---|
| | A 01 N |

The present search report has been drawn up for all claims

| Place of search | Date of completion of the search | Examiner |
|---|---|---|
| THE HAGUE | 03-09-1986 | DECORTE D. |